# EUROPÄISCHE PATENTSCHRIFT

(11) **EP 3 885 290 B1**
(45) Veröffentlichungstag und Bekanntmachung des Hinweises auf die Patenterteilung: **12.07.2023**
(21) Anmeldenummer: 21164290.5
(22) Anmeldetag: 23.03.2021
(51) Int. Cl.: H02K 7/08, H02K 41/03, F16C 13/00, F16C 19/08, F16C 29/00, F16C 29/04, B65G 54/02

(54) **TRANSPORTSYSTEM**
TRANSPORT SYSTEM
SYSTÈME DE TRANSPORT

(30) Priorität: 27.03.2020 DE 102020108510
(43) Veröffentlichungstag der Anmeldung: 29.09.2021
(73) Patentinhaber: Hofstetter, Norbert, 86676 Hollenbach (DE)
(72) Erfinder: Hofstetter, Norbert, 86676 Hollenbach (DE); Kumeth, Siegmund, 92280 Kastl (DE)
(74) Vertreter: Glück Kritzenberger Patentanwälte PartGmbB

(56) Entgegenhaltungen:
- EP-A1- 3 028 965
- DE-A1- 3 538 674
- DE-A1-102012 103 378

## Beschreibung

Die vorliegende Erfindung betrifft ein Transportsystem zur Beförderung von Gegenständen entlang einer Transportstrecke. Mehr im Detail betrifft die vorliegende Erfindung ein Transportsystem mit einem verbesserten, elektromagnetischen Antriebssystem.

Umlaufende Transportvorrichtungen sind aus dem Stand der Technik in verschiedenen Ausgestaltungen bekannt. Beispielsweise zeigt die US 6,876,107 B2 eine umlaufende Transportvorrichtung, bei der an der Transportstrecke eine Vielzahl von Spulen angeordnet sind. Die Spulen sind dabei unmittelbar benachbart zueinander angeordnet und sind in einem Kurvenbereich der Transportstrecke derart ausgebildet, dass dort eine unmittelbare Nebeneinanderanordnung sichergestellt ist. Dabei weisen die Spulen bei Draufsicht eines in Richtung der Innenseite der Kurve folgende Gestalt auf.

Bei umlaufenden Transportvorrichtungen wird üblicherweise versucht, einen Kurvenradius möglichst klein zu wählen, um einen kompakten Aufbau sicherzustellen. Durch die in der US 6,876,107 B2 vorgeschlagene Spulenanordnung ist es zwar möglich, auf der geraden Transportstrecke eine konstante Geschwindigkeit mit Läufern zu fahren, jedoch nicht im Kurvenbereich. Die dort offenbarte Anordnung der Spulen reduziert die Fördergeschwindigkeit im Kurvenbereich, so dass es im Betrieb zu unerwünschten Störungen bzw. notwendig großen Abständen zwischen einzelnen Läufern kommt.

Ferner ist aus der EP 2 560 904 B1 eine Transportvorrichtung zur Beförderung eines Produkts bekannt, wobei die Transportvorrichtung eine Vielzahl von unabhängig voneinander bewegbaren Förderelementen zum Fördern von Produkten, eine ortsfeste, umlaufend angeordnete Laufschiene, welche einen Laufpfad mit wenigstens einer Laufbahn für das Förderelement definiert und eine Linearmotorantriebsvorrichtung zum Antreiben der Förderelemente umfasst, wobei jedes Förderelement Permanentmagnete aufweist, die mit Spulen der Linearantriebsvorrichtung in Wirkverbindung stehen und wobei jedes Förderelement wenigstens ein erstes Teilelement und ein zweites Teilelement aufweist, welche mittels Gelenke gelenkig miteinander verbunden sind. Jedes Förderelement weist einen modularen Aufbau auf und die einzelnen Teilelemente einen gleichen Grundaufbau. Eine Gelenkachse eines jeden Gelenks ist parallel zur Laufbahn angeordnet.

Die Druckschrift DE 35 38 674 A1 offenbart ein Transportsystem zur Beförderung von Gegenständen entlang einer Transportstrecke. Das Transportsystem umfasst wenigstens eine ortsfeste Laufschiene und zumindest einen entlang der Laufschiene bewegbaren Läufer zum Befördern der Gegenstände entlang der Transportstrecke. Ferner umfasst es einen elektromagnetischen Antrieb zum Antreiben des zumindest einen Läufers mittels elektromagnetischer Kräfte, wobei der elektromagnetische Antrieb eine Vielzahl von ortsfesten Spulenelementen und zumindest einen Permanentmagneten aufweist, wobei die ortsfesten Spulenelemente an der ortsfesten Laufschiene und der zumindest eine Permanentmagnet an dem zumindest einem Läufer vorgesehen sind. Die Laufschiene weist zumindest abschnittsweise entlang der Transportstrecke eine erste und zweite Führungseinrichtung auf, mittels der der zumindest eine Läufer jeweils beidseitig mit zwei zueinander beabstandeten und jeweils zwischen der ersten und zweiten Führungseinrichtung verlaufenden Gelenkachsen geführt ist, die jeweils an einem ersten freien Ende mit einer ersten Führungs- und Lagereinrichtung in der ersten Führungseinrichtung und an einem jeweiligen zweiten freien Ende mit einer zweiten Führungs- und Lagereinrichtung in der zweiten Führungseinrichtung geführt sind. Die ersten und zweiten Führungs- und Lagereinrichtungen umfassen jeweils wenigstens eine erste und zweite Laufrolle, die zwischen einer ersten und zweiten, einander gegenüberliegenden und parallel zu den Gelenkachsen verlaufenden Führungsfläche der jeweiligen Führungseinrichtung geführt sind, wobei die jeweils erste Laufrolle in einem ersten Anlageabschnitt der ersten Führungsfläche und die jeweils zweite Laufrolle in einem zweiten Anlageabschnitt der zweiten Führungsfläche anliegen und geführt sind, wobei der erste und zweite Anlageabschnitt entlang der Gelenkachsen zueinander versetzt und einander gegenüberliegend sind.

Die Druckschrift DE 10 2012 103378 A1 offenbart eine Transportvorrichtung zur Förderung von Produkten, umfassend mehrere symmetrisch aufgebaute bewegbare Schlitten mit jeweils mehreren Permanentmagneten, eine umlaufende Laufschiene zur Führung der Schlitten, und eine Linearmotor-Antriebsvorrichtung zum Antrieb der Schlitten. Jede symmetrische Schlittenhälfte weist drei Laufrollen auf, wobei die drei Laufrollen der ersten Schlittenhälfte auf zwei Laufflächen an einer ersten Seitenflanke der Laufschiene und die drei Laufrollen der zweiten Schlittenhälfte auf zwei Laufflächen an einer zweiten Seitenflanke der Laufschiene anliegen, und wobei die erste Lauffläche und die zweite Lauffläche jeder Seitenflanke der Laufschiene unter einem spitzen Winkel zur Längsmittelebene angeordnet ist und die zwei Laufflächen jeder Seitenflanke miteinander einen Winkel von 80° bis 100° einschließen.

Schließlich ist aus der DE 10 2017 108 572 A1 ein Lineartransportsystem zur Förderung eines Objekts bekannt geworden, wobei das Lineartransportsystem wenigstens eine ortsfeste Laufschiene und wenigstens eine bewegbare Fördereinrichtung umfasst. Die Fördereinrichtung umfasst hierbei eine erste Führungseinheit mit einer ersten Laufrolle, einer zweiten Laufrolle und einem ersten Drehschemel, wobei an dem ersten Drehschemel die erste Laufrolle und die zweite Laufrolle drehbar gelagert sind und an der Laufschiene anliegen, wobei die Laufschiene eine in Längsrichtung verlaufende Schienenlängsachse aufweist. Ferner ist der erste Drehschemel drehbar um eine Drehschemelachse gelagert, wobei die Drehschemelachse geneigt, insbesondere senkrecht, zu der Schienenlängsachse angeordnet ist.

Nachteilig an diesen bekannten Lösungen ist eine unzureichende mechanische Stabilität zum Transportieren von schwereren Lasten als Gegenstände mittels des zumindest einen Läufers entlang der Laufschiene. Auch für den Transport von schweren Gegenständen mittels des zumindest einen Läufers sollte dabei ein hochpräzise und möglichst toleranzfreie Führung des Läufers entlang der Transportstrecke möglich sein.

Aufgabe der vorliegenden Erfindung ist es daher, ein Transportsystem zur Beförderung von Gegenständen entlang einer Transportstrecke aufzuzeigen, welches sich auch bei einem Transport von schwereren Gegenständen durch eine hochpräzise und nahezu toleranzfreie HKU001 PEP

Führung der Transportpaletten auszeichnet. Zur Lösung dieser Aufgabe ist ein Transportsystem entsprechend dem Patentanspruch 1 ausgebildet. Die Unteransprüche betreffen dabei besonders vorteilhafte Ausführungsvarianten der Erfindung.

Der wesentliche Aspekt der vorliegenden Erfindung ist darin zu sehen, ein Transportsystem zur Beförderung von Gegenständen entlang einer Transportstrecke vorzusehen, wenigstens umfassend eine ortsfeste Laufschiene und zumindest einen entlang der Laufschiene bewegbaren Läufer zum Befördern der Gegenstände entlang der Transportstrecke, ferner umfassend einen elektromagnetischen Antrieb zum Antreiben des zumindest einen Läufers mittels elektromagnetischer Kräfte, wobei der elektromagnetische Antrieb eine Vielzahl von ortsfesten Spulenelementen und zumindest einen Permanentmagneten aufweist. Dabei sind die ortsfesten Spulenelemente an der ortsfesten Laufschiene und der zumindest eine Permanentmagnet an dem zumindest einem Läufer vorgesehen.

Die Laufschiene weist dabei zumindest abschnittsweise entlang der Transportstrecke eine erste und zweite Führungseinrichtung auf, mittels der der zumindest eine Läufer jeweils beidseitig mit zwei zueinander beabstandeten und jeweils zwischen der ersten und zweiten Führungseinrichtung verlaufenden Gelenkachsen geführt ist, die ihrerseits wiederum jeweils an einem ersten freien Ende mit einer ersten Führungs- und Lagereinrichtung in der ersten Führungseinrichtung und an einem jeweiligen zweiten freien Ende mit einer zweiten Führungs- und Lagereinrichtung in der zweiten Führungseinrichtung geführt sind.

Die ersten und zweiten Führungs- und Lagereinrichtungen umfassen jeweils wenigstens eine erste und zweite Laufrolle, die zwischen einer ersten und zweiten, einander gegenüberliegenden und parallel zu den Gelenkachsen verlaufenden Führungsfläche der jeweiligen Führungseinrichtung geführt sind.

Die jeweils erste Laufrolle liegt in einem ersten Anlageabschnitt der ersten Führungsfläche und die jeweils zweite Laufrolle in einem zweiten Anlageabschnitt der zweiten Führungsfläche an und sind zueinander vorgespannt geführt, wobei der erste und zweite Anlageabschnitt entlang der Gelenkachsen zueinander versetzt und einander gegenüberliegend sind. Durch die gegenseitig vorgespannte Führung der Laufrollen der Führungs- und Lagereinrichtung in der ersten und zweiten Führungseinrichtung wird dabei auch bei Aufnahme schwererer Gegenstände auf oder an dem Läufer eine hochpräzise und möglichst toleranzfreie Führung des Läufers entlang der Transportstrecke ermöglicht.

Gemäß einer vorteilhaften Ausführungsvariante kann dabei vorgesehen sein, dass die jeweiligen beiden freien Enden der beiden Gelenkachsen in der ersten und zweiten Führungseinrichtung in zwei gegenüberliegend und parallel zur Transportstrecke orientierten Führungsebenen geführt sind.

Gemäß einer weiteren vorteilhaften Ausführungsvariante kann dabei vorgesehen sein, dass die jeweilige erste und zweite Laufrolle der entsprechend ersten Führungs- und Lagereinrichtung um die jeweilige Gelenkachse drehbar und unmittelbar benachbart an dieser im Bereich des jeweiligen ersten freien Endes vorgesehen sind.

Gemäß einer nochmals weiteren vorteilhaften Ausführungsvariante kann dabei vorgesehen sein, dass die jeweilige erste und zweite Laufrolle der entsprechenden zweiten Führungs- und Lagereinrichtung um die jeweilige Gelenkachse drehbar und unmittelbar benachbart an dieser im Bereich des jeweiligen zweiten freien Endes vorgesehen sind.

Gemäß einer nochmals weiteren vorteilhaften Ausführungsvariante kann dabei vorgesehen sein, dass die jeweilige erste Laufrolle der ersten Führungs- und Lagereinrichtung an dem ersten Anlageabschnitt der ersten Führungsfläche anliegend gegen die an dem zweiten Anlageabschnitt der zweiten Führungsfläche jeweils anliegende zweite Laufrolle in der ersten Führungseinrichtung vorgespannt geführt ist und die jeweils erste Laufrolle der zweiten Führungs- und Lagereinrichtung an dem ersten Anlageabschnitt der ersten Führungsfläche anliegend gegen die jeweilige an dem zweiten Anlageabschnitt der zweiten Führungsfläche anliegende zweite Laufrolle in der zweiten Führungseinrichtung vorgespannt geführt ist.

Erfindungsgemäß ist dabei vorgesehen, dass die jeweilige erste und zweite Laufrolle der ersten Führungs- und Lagereinrichtung der entsprechenden Gelenkachse vorgespannt gegenüber der jeweiligen ersten und zweiten Laufrolle der zweiten Führungs- und Lagereinrichtung der entsprechenden Gelenkachse geführt sind.

Gemäß einer nochmals weiteren vorteilhaften Ausführungsvariante kann dabei vorgesehen sein, dass die erste Führungseinrichtung zwischen der ersten und zweiten Führungsfläche einen ersten Führungsraum aufweist, der im Bereich der ersten und zweiten Anlagefläche in den ersten Führungsraum zurückspringt, indem der erste Führungsraum in diesem Bereich gestuft ausgebildet ist.

Gemäß einer nochmals weiteren vorteilhaften Ausführungsvariante kann dabei vorgesehen sein, dass die zweite Führungseinrichtung zwischen der ersten und zweiten Führungsfläche einen zweiten Führungsraum aufweist, der im Bereich der ersten und zweiten Anlagefläche in den zweiten Führungsraum zurückspringt, indem der zweite Führungsraum in diesem Bereich gestuft ausgebildet ist.

Gemäß einer nochmals weiteren vorteilhaften Ausführungsvariante kann dabei vorgesehen sein, dass die Laufrollen identisch zueinander ausgebildete Außendurchmesser aufweisen.

Gemäß einer nochmals weiteren vorteilhaften Ausführungsvariante kann dabei vorgesehen sein, dass sämtliche Laufrollen jeweils mittels zwei Rollenlagen drehbar um die entsprechende Gelenkachse gelagert sind.

Gemäß einer nochmals weiteren vorteilhaften Ausführungsvariante kann dabei vorgesehen sein, dass mehrere unabhängig und autonom zueinander entlang der Transportstrecke bewegbare Läufer vorgesehen sind, wobei der elektromagnetische Antrieb als Linearantrieb, vorzugsweise als Langstator-Linearantrieb ausgebildet ist.

Gemäß einer nochmals weiteren vorteilhaften Ausführungsvariante kann dabei vorgesehen sein, dass der Läufer an einer der Oberseite gegenüberliegenden Unterseite zumindest vier weitere, in ihrer jeweiligen Längserstreckung lotrecht zu den ersten beiden Gelenkachsen stehende Gelenkachsen aufweist, die sich paarweise entlang einer Führungsschiene gegenüberliegen.

Gemäß einer nochmals weiteren vorteilhaften Ausführungsvariante kann dabei vorgesehen sein, dass den jeweiligen freien Enden der Gelenkachsen jeweils eine drehbare Laufrolle angeordnet ist.

Gemäß einer nochmals weiteren vorteilhaften Ausführungsvariante kann dabei vorgesehen sein, dass die entsprechenden Laufflächen der Laufrollen senkrecht zu den Laufflächen der Laufrollen verlaufen.

Gemäß einer nochmals weiteren vorteilhaften Ausführungsvariante kann dabei vorgesehen sein, dass sämtliche die Laufrollen identisch untereinander, sowie vorzugsweise identisch zu den Laufrollen ausgebildet sind.

Gemäß einer nochmals weiteren vorteilhaften Ausführungsvariante kann dabei vorgesehen sein, dass sämtliche Laufrollen jeweils mittels zwei Rollenlager drehbar um die entsprechende Gelenkachse gelagert sind.

Gemäß einer nochmals weiteren vorteilhaften Ausführungsvariante kann dabei vorgesehen sein, dass die Führungsschiene an der Oberseite des Antriebsmoduls der Laufschiene entlang dessen Längserstreckung vorgesehen ist und die mit den an der Unterseite des Läufers angeordneten Laufrollen in Wirkeingriff steht.

Gemäß einer nochmals weiteren vorteilhaften Ausführungsvariante kann dabei vorgesehen sein, dass die Führungsschiene eine seitliche Führung für den Läufer ausbildet, der sich während seiner Bewegung beidseitig sowie kontaktschlüssig entlang der Transportstrecke mit seinen Laufrollen an der Führungsschiene entlang rollt bzw. an dieser abwälzt.

Gemäß einer nochmals weiteren vorteilhaften Ausführungsvariante kann dabei vorgesehen sein, dass die erste und/oder zweite Gelenkachse des Läufers an dem ersten und zweiten freien Ende jeweils einen ersten und zweiten Gelenkachsenabschnitt aufweist, wobei der erste Gelenkachsenabschnitt eine erste Rotationsache für die jeweils erste Laufrolle und der jeweils zweite Gelenkachsenabschnitt eine zweite Rotationsachse für die jeweils zweite Laufrolle ausbildet, und wobei die jeweils erste Rotationsachse versetzt, insbesondere parallel versetzt, zu der jeweils zweiten Rotationsachse verläuft.

Gemäß einer nochmals weiteren vorteilhaften Ausführungsvariante kann dabei vorgesehen sein, dass die erste und/oder die zweite Gelenkachse im Bereich der jeweiligen Gelenkachsenabschnitte als Exzenterachse ausgebildet ist.

Unter "getaktet" wird im Rahmen der vorliegenden Erfindung eine intermittierende Bewegungen verstanden, die sich im Gegensatz zu einer kontinuierlichen Bewegung durch schrittweise oder periodisch wiederkehrende Bewegungsabläufe auszeichnen, und zwar mit einem Stillstand nach oder vor jedem Bewegungsschritt. Ein intermittierend bewegtes Element, das beispielsweise ein um definierte Wegstrecke bewegter Läufer sein kann, vollzieht hierbei ein Bewegungsprofil, bei dem der Läufer periodisch nahezu stoß- und/oder ruckfrei auf eine gewisse Geschwindigkeit beschleunigt und anschließend wieder abgebremst wird. Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an Ausführungsbeispielen näher erläutert. Es zeigen:
- Fig. 1: in vereinfachter perspektivischer Darstellung eine beispielhafte Ausführungsvariante eines erfindungsgemäßen Transportsystems;
- Fig. 2: ein teilweise offen dargestellter Vertikalschnitt eines ausschnittsweise abgebildeten Transportsystems gemäß der Figur 1 im Bereich der ersten und zweiten Führungseinrichtung mit einem Läufer;

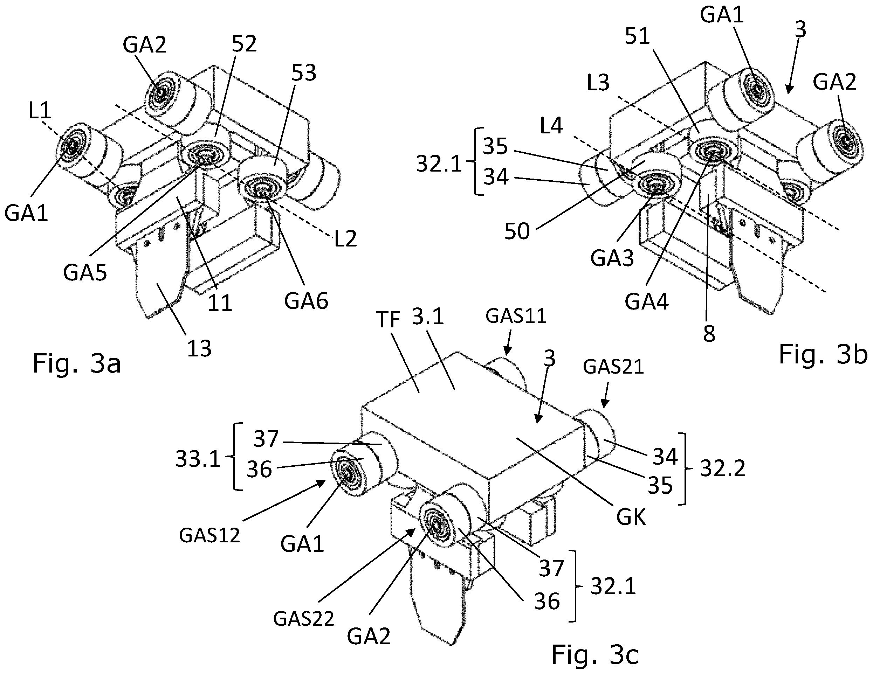

- Fig. 3a bis c: eine Ausführungsvariante eines Läufers in jeweils unterschiedlicher Perspektivdarstellung;

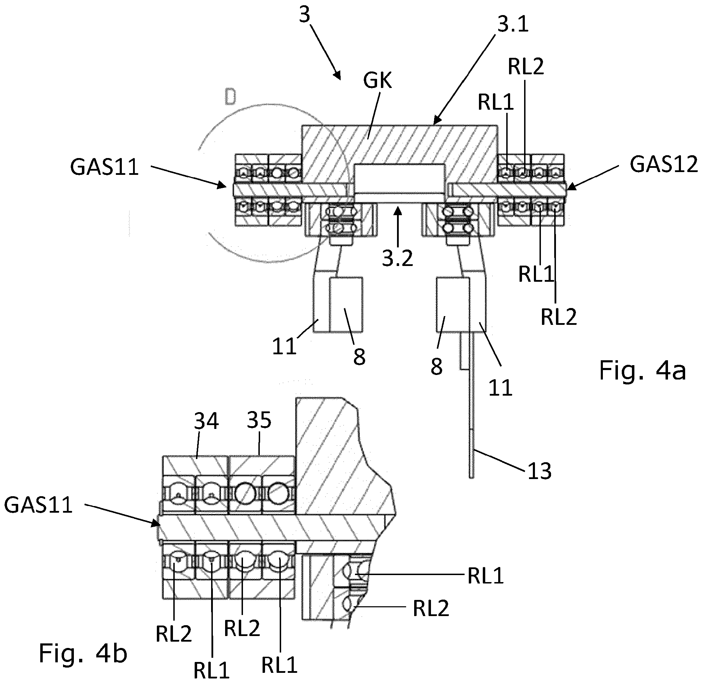

- Fig. 4a: ein Vertikalschnitt eines Läufers gemäß der Figuren 3a bis c;
- Fig. 4b: den in Figur 4a eingekreisten Bereich des Läufers in einer vergrößerten Darstellung;
- Fig. 5: einen Vertikalschnitt des Transportsystems gemäß der Figur 1 bzw. Figur 2 im Bereich der ersten und zweiten Führungseinrichtung mit einem Läufer; und
- Fig. 6a und b: einen Vertikalschnitt durch eine weitere beispielhafte Ausführungsvariante des Läufers.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

In den Figuren ist mit 1 ein Transportsystem zur Beförderung von Gegenständen entlang einer Transportstrecke TS bezeichnet. Das Transportsystem 1 umfasst hierbei eine ortsfeste Laufschiene 2 sowie zumindest einen Läufer 3 zum Befördern der Gegenstände entlang der Transportstrecke TS.

Ferner umfasst das Transportsystem 1 einen elektromagnetischen Antrieb 4 zum Antreiben des zumindest einen Läufers 3 mittels elektromagnetischer Kräfte. Dabei kann der elektromagnetische Antrieb 4 des Transportsystems 1 auch zumindest ein, vorzugsweise jedoch mehrere identisch zueinander ausgebildete Antriebsmodule 5 aufweisen, die entlang der Transportstrecke TS modulartig benachbart vorgesehen sein können und dabei je Antriebsmodul 5 aneinander angeordnet werden.

In einer bevorzugten Ausführungsvariante ist auch die Laufschiene 2 modulartig ausgebildet und umfasst dabei mehrere Laufschienenmodule 2.1 die nach dem Prinzip eines Baukastens miteinander verbunden werden können.

Hierbei kann vorgesehen sein, dass einem jeden Laufschienenmodul 2.1 ein separates Antriebsmodul 5 zugeordnet ist. In anderen Worten kann einem Laufschienenmodul 2.1 damit ein eigenes Antriebsmodul 5 zugeordnet sein, das nach dem Prinzip eines Schienenstecksystems zusammengebaut werden kann. Damit ist das bzw. die Antriebsmodule 5 als Teil bzw. Bestandteil der Laufschiene 2 vorgesehen.

Mithin kann das Transportsystem 1 mehrere Läufer 3 aufweisen, die zueinander identisch ausgebildet sein können, wobei die mehreren Läufer 3 beabstandet an der Laufschiene 2 vorgesehen sein können. Jeder Läufer 3 kann unabhängig von den weiteren vorgesehenen Läufern 3 bewegt werden, und zwar vorzugsweise jeweils autonom.

Beispielsweise umfassen jeweiligen die Läufer 3 einen Grundkörper GK an dessen jeweiliger Oberseiten 3.1 eine Transport- oder Haltefläche TF aus, an der vorzugsweise jeweils eine Aufnahme, nicht gezeigt in den Figuren, vorgesehen sein kann, die für die Aufnahme von Gegenständen (z.B. Werkstücke oder andere Produkte) vorgesehen ist, die mit dem umlaufenden Läufern 3 in und/oder entgegen einer Transportrichtung A entlang der Transportstrecke TS bewegt werden können.

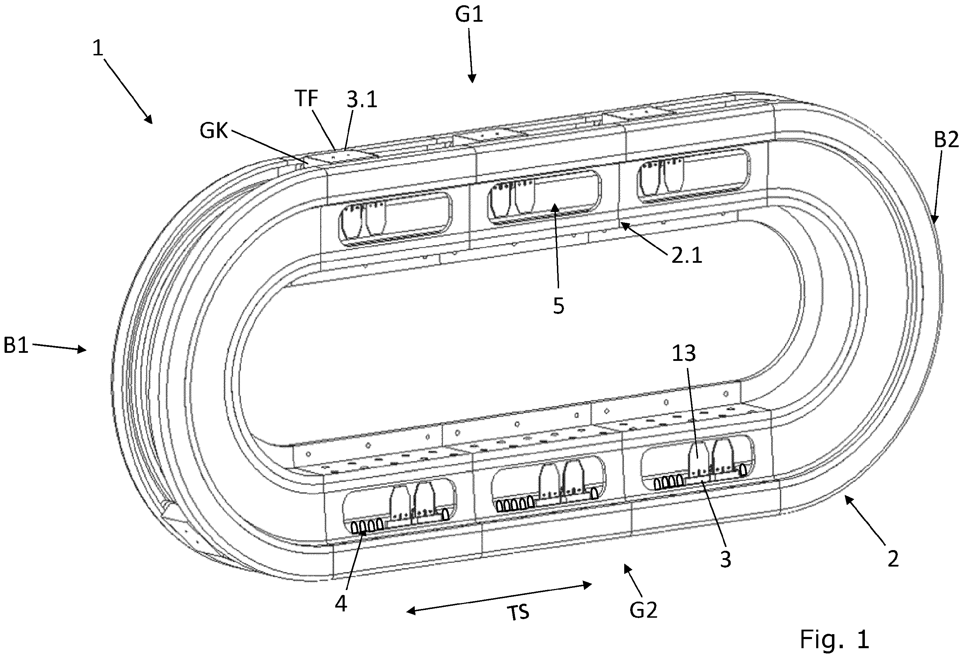

In der Ausführungsvariante der Figur 1 weist die Laufschiene 2 einen ersten Bogenabschnitt B1, einen zweiten Bogenabschnitt B2 sowie einen ersten Geradenabschnitt G1 und einen zweiten Geradenabschnitt G2 auf. Die beiden Geradenabschnitte G1, G2 sind dabei zwischen dem ersten und zweiten Bogenabschnitt B1, B2 vorgesehen und verbinden dabei die jeweiligen freien Enden der beiden Bogenabschnitt B1, B2 derart miteinander, dass die Laufschiene 2 eine im Wesentlichen ovale, geschlossen umlaufende Schleife für die Läufer 3 ausbildet. Jedoch ist es auch möglich, eine andere Laufbahnform der Laufschiene 2, z. B. eine winkelförmige Laufbahnform mittels der einzelnen modulartig ausgebauten Schienenmodule zusammenzusetzen. Die Transportstrecke TS erstreckt sich dabei zumindest entlang der Geradenabschnitte G1, G2 und umfasst vorteilhaft jedoch auch zusätzlich die beiden Bogenabschnitte B1, B2.

Vorteilhaft weist damit Laufschiene 2 unterschiedliche Laufschienenmodule 2.1 auf, und zwar Laufschienenmodule 2.1 die die Bogenabschnitte B1, B2 ausbilden und Laufschienenmodule 2.1 für die Geradenabschnitte G1, G2.

Der elektromagnetische Antrieb 4 umfasst dabei einen Linearmotor 6 mit einem Stator 7, zumindest einem Permanentmagneten 8 und einer nicht weitergehend gezeigten zentralen Steuereinrichtung. Der Stator 7 kann dabei von einer Vielzahl von getrennt zueinander und beabstandet an der Laufschiene 2 vorgesehenen und bestrombar ausgebildeten Spulenelementen 9 gebildet sein, während der zumindest eine Permanentmagnet 8 an dem zumindest einem Läufer 3 angeordnet ist. Gemäß einer Ausführungsvariante sind die bestrombaren Spulenelemente 9 in dem jeweiligen Antriebsmodul 5 nebeneinander angeordnet. Ein jedes Antriebsmodul 5 ist mit der Laufschiene 2 verbunden bzw. als Teil oder Bestandteil der Laufschiene 2 ausgebildet.

Dabei sind die bestrombaren Spulenelemente 9 in einer Reihe parallel verlaufend zu der Laufschiene 2 angeordnet. Mehr im Detail kann der zumindest eine Permanentmagnet 8 derart an dem zumindest einen Läufer 3 vorgesehen sein, dass dieser seitlich des Stators 7 angeordnet ist. In anderen Worten weist also der elektromagnetische Antrieb 4 eine Vielzahl von ortsfesten Spulenelementen 9, die den Stator 7 bilden, und zumindest einen Permanentmagnet 8 auf, wobei die ortsfesten Spulenelemente 9 an der ortsfesten Laufschiene 2 und der zumindest eine Permanentmagnet 8 an dem zumindest einem Läufer 3 angeordnet sind.

Die Steuereinrichtung ist dabei mit dem Stator 7 elektrisch verbunden und dazu ausgebildet, einen Spulenstrom durch eine vordefinierte Anzahl von Spulenelementen 9, also einen Stromfluss durch die vordefinierte Anzahl von Spulenelementen 9, zu variieren. Der Spulenstrom erzeugt ein magnetisches Wechselfeld, das mit dem zumindest einen Permanentmagneten 8 wechselwirkt. Die Steuereinrichtung ist dabei dazu ausgebildet, die Bewegung des zumindest einen Läufers 3 entlang der Transportstrecke TS zu steuern - und/oder zu regeln und zwar für jeden Läufer 3 separat und unabhängig zu den weiteren Läufern 3.

Der elektromagnetische Antrieb 4 ist damit als Linearantrieb ausbildet, mehr im Detail als Langstator-Linearantrieb.

Mehr im Detail steuert und/oder regelt die Steuereinrichtung die Spulenströme durch die Spulenelemente 9 derart, dass über die Wechselwirkung der Permanentmagnete 8 mit dem durch die Spulenelemente 9 erzeugten magnetischen Wanderfeld eine entlang bzw. längs des Antriebsmoduls 5 gerichtete Kraft auf den zumindest einen Läufer 3 ausgeübt wird.

Wie bereits erwähnt, umfasst dabei ein jeder Läufer 3 einen im Wesentlichen rechteckförmigen Grundkörper GK an dessen Oberseite 3.1 eine Transport- oder Haltefläche TF ausgebildet ist. Zudem weist ein jeder Läufer 3 in Längsrichtung der Transportstrecke TS gesehen jeweils zueinander beabstandete erste und zweite Gelenkachsen GA1 und GA2 auf. Die jeweiligen Gelenkachsen GA1 und GA2 ihrerseits wiederum verlaufen dabei in ihrer jeweiligen Längserstreckung quer, vorzugsweise lotrecht, zur Längserstreckung der Transportstrecke TS. Zudem verläuft die Längserstreckung der ersten Gelenkachse GA1 vorzugsweise parallel zu der Längserstreckung der zweiten Gelenkachse GA2.

Vorteilhaft weist dabei die jeweilige Gelenkachse GA1, GA2 an ihrem entsprechenden ersten freien Ende GAS11, GAS21 eine erste Führungs- und Lagereinrichtung 32.1, 32.2 und an ihrem entsprechenden zweiten freien Ende GAS12, GAS22 eine entsprechende zweite Führungs- und Lagereinrichtung 33.1, 33.2 auf. Mehr im Detail weist dabei die erste Gelenkachse GA1 an ihrem ersten freien Ende GAS11 die erste Führungs- und Lagereinrichtung 32.1 und an ihrem zweiten freien Ende GAS12 die zweite Führungs- und Lagereinrichtung 33.1 auf, während die zweite Gelenkachse GA2 an ihrem ersten freien Ende GAS21 die erste Führungs- und Lagereinrichtung 32.2 und an ihrem zweiten freien Ende GAS22 die zweite Führungs- und Lagereinrichtung 33.2 aufweist.

Zudem umfassen die ersten und zweiten Führungs- und Lagereinrichtungen 32.1, 32.2, 33.1, 33.2 jeweils wenigstens eine erste und eine zweite Laufrolle 34, 35, 36, 37. Mehr im Detail umfasst dabei die erste Führungs- und Lagereinrichtung 32.1 der ersten Gelenkachse GA1 an ihrem ersten freien Ende GAS11 die erste und zweite Laufrolle 34 und 35, während die an dem zweiten freien Ende GAS12 der zweiten Führungs- und Lagereinrichtung 33.1 der ersten Gelenkachse GA1 die erste und zweite Laufrolle 36 und 37 vorgesehen sind. Ferner umfasst dabei die erste Führungs- und Lagereinrichtung 33.1 der zweiten Gelenkachse GA2 an ihrem ersten freien Ende GAS21 die erste und zweite Laufrolle 34 und 35, während die an dem zweiten freien Ende GAS22 der zweiten Führungs- und Lagereinrichtung 33.2 der zweiten Gelenkachse GA2 die erste und zweite Laufrolle 36 und 37 vorgesehen sind.

Dabei sind die jeweiligen Laufrollen 34 und 35 identisch zueinander sowie identisch zu den beiden weiteren Laufrollen 35 und 36 ausgebildet. Insbesondere weisen die Laufrollen 34 und 35 bzw. 36 und 37 einen identischen Durchmesser im Bereich der jeweiligen Lauffläche, d.h. einen identischen Außendurchmesser, sowie ein identische Breite der Lauffläche auf.

Dabei kann die jeweilige Lauffläche sämtlicher Laufrollen 34...37 aus einem Kunststoff gebildet sein.

Ferner vorteilhaft sind dabei sämtliche Laufrollen 34...37 jeweils mittels zwei Rollenlager RL1, RL2 drehbar um die entsprechende Gelenkachse GA1, GA2 gelagert. Bevorzugt sind die Gelenkachsen GA1, GA2 drehfest in dem entsprechenden Läufer 3 aufgenommen, bzw. angeordnet. Die jeweiligen Rollenlager RL1, RL2 sind dabei unmittelbar benachbart, vorteilhaft kontaktschlüssig benachbart, an der entsprechenden Gelenkachse GA1, GA2 angeordnet.

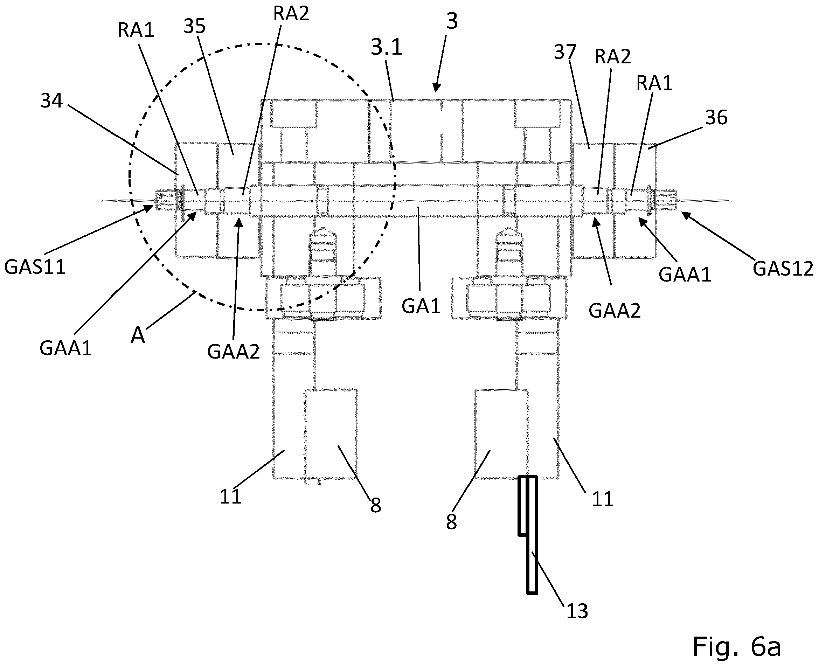

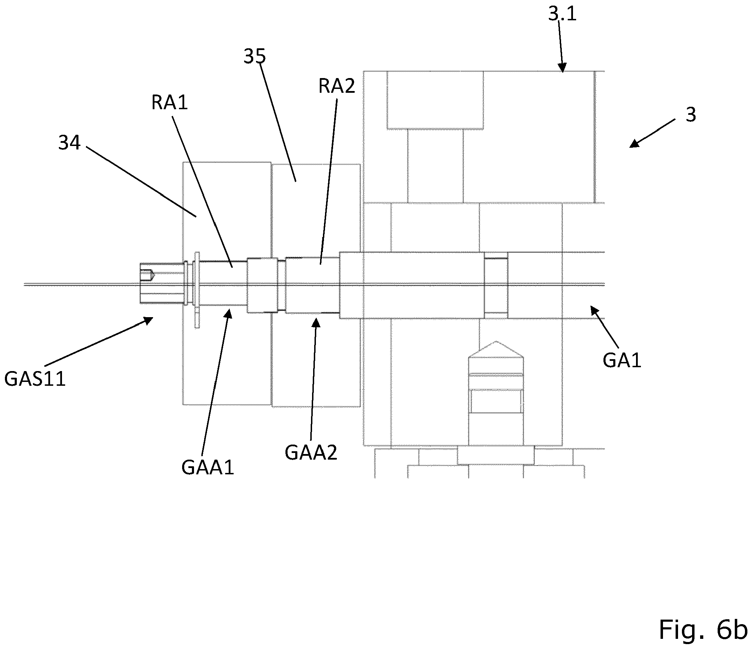

Gemäß einer in den Figuren 6a und 6b gezeigten Ausführungsvariante kann die erste und zweite Gelenkachse GA1, GA2 des Läufers 3 auch jeweils an dem ersten und zweiten freien Ende GAS11, GAS12, GAS21, GAS22 jeweils einen ersten und zweiten Gelenkachsenabschnitt GAA1, GAA2 aufweisen, wobei der erste Gelenkachsenabschnitt GAA1 eine erste Rotationsache RA1 für die jeweils erste Laufrolle 34 und 36 und der jeweils zweite Gelenkachsenabschnitt GAA2 eine zweite Rotationsachse RA2 für die jeweils zweite Laufrolle 35 und 37 ausbildet, und wobei die jeweils erste Rotationsachse RA1 versetzt, insbesondere parallel versetzt, zu der jeweils zweiten Rotationsachse RA2 verläuft. Werden dabei auf die jeweiligen Gelenkachsenabschnitte GAA1, GAA2 identische Laufrollen 34...37 mit einem insbesondere identischen Außendurchmesser der Laufflächen drehbar angeordnet, so stellt sich an den Laufflächen der Laufrollen 34...37 ein Höhenversatz, bzw. eine Stufe, ein, die die Verspannung der Laufrollen 34...37 an den ersten und zweiten Anlageabschnitten 30.11, 30.21, 31.11, 31.21 weitergehen unterstützt. Die erste und zweite Gelenkachse GA1, GA2 ist in dieser Ausführungsvariante im Bereich der jeweiligen Gelenkachsenabschnitte GAA1, GAA2 damit als Exzenterachse ausgebildet.

In anderen Worten kann also beispielsweise die erste Gelenkachse GA1 an dem ersten freien Ende GAS11 den ersten und zweiten Gelenkachsenabschnitt GAA1, GAA2 aufweisen, wobei der erste Gelenkachsenabschnitt GAA1 die erste Rotationsache RA1 für die erste Laufrolle 34 und den zweiten Gelenkachsenabschnitt GAA2 der zweiten Rotationsachse RA2 für die zweite Laufrolle 35 ausbildet, und wobei die jeweils erste Rotationsachse RA1 versetzt, insbesondere parallel versetzt, zu der jeweils zweiten Rotationsachse RA2 verläuft.

Symmetrisch dazu kann die erste Gelenkachse GA1 an dem zweiten freien Ende GAS12 ebenfalls den ersten und zweiten Gelenkachsenabschnitt GAA1, GAA2 aufweisen, wobei der erste Gelenkachsenabschnitt GAA1 die erste Rotationsache RA1 für die erste Laufrolle 36 und den zweiten Gelenkachsenabschnitt GAA2 der zweiten Rotationsachse RA2 für die zweite Laufrolle 37 ausbildet, und wobei auch hier die jeweils erste Rotationsachse RA1 versetzt, insbesondere parallel versetzt, zu der jeweils zweiten Rotationsachse RA2 verläuft.

Ferner kann die zweite Gelenkachse GA2 an dem ersten freien Ende GAS21 den ersten und zweiten Gelenkachsenabschnitt GAA1, GAA2 aufweisen, wobei der erste Gelenkachsenabschnitt GAA1 die erste Rotationsache RA1 für die erste Laufrolle 34 und den zweiten Gelenkachsenabschnitt GAA2 der zweiten Rotationsachse RA2 für die zweite Laufrolle 35 ausbildet, und wobei die jeweils erste Rotationsachse RA1 versetzt, insbesondere parallel versetzt, zu der jeweils zweiten Rotationsachse RA2 verläuft.

Symmetrisch dazu kann die zweite Gelenkachse GA2 an dem zweiten freien Ende GAS22 ebenfalls den ersten und zweiten Gelenkachsenabschnitt GAA1, GAA2 aufweisen, wobei der erste Gelenkachsenabschnitt GAA1 die erste Rotationsache RA1 für die erste Laufrolle 36 und den zweiten Gelenkachsenabschnitt GAA2 der zweiten Rotationsachse RA2 für die zweite Laufrolle 37 ausbildet, und wobei auch hier die jeweils erste Rotationsachse RA1 versetzt, insbesondere parallel versetzt, zu der jeweils zweiten Rotationsachse RA2 verläuft.

Dabei kann die erste Gelenkachse GA1 und/oder zweite Gelenkachse GA2 auch bei dieser Ausführungsvariante einteilig, insbesondere einstückig ausgebildet sein, und die an ihren jeweiligen ersten und zweiten freien Enden GAS11, GAS12, GAS21, GAS22 die ersten und zweiten Gelenkachsenabschnitt GAA1, GAA2 aufweisen, bzw. ausbilden. Alternativ kann die erste Gelenkachse GA1 und/oder zweite Gelenkachse GA2 auch mehrteilig ausgebildet sein, und beispielsweise jeder erste und zweite Gelenkachsenabschnitt GAA1, GAA2 ein separates Teil bzw. Bestandteil der entsprechenden ersten bzw. zweite Gelenkachse GA1, GA2 ausbilden, die fest, jedoch vorzugsweise lösbar, miteinander verbunden sind.

Insbesondere ist die Länge des jeweiligen ersten und zweiten Gelenkachsenabschnitts GAA1, GAA2 der ersten und zweiten Rotationsachse RA1, RA2 an die Breite der entsprechend dort aufgenommenen Laufrolle 34...37 angepasst. Mehr im Detail kann die Länge entlang der Längserstreckung des jeweiligen ersten und zweiten Gelenkachsenabschnitt GAA1, GAA2 der ersten und/oder zweiten Gelenkachse GA1, GA2 der Breite der Lauffläche der entsprechend dort angeordneten Laufrolle 34...37 entsprechen.

Ferner kann der Läufer 3 an dem Grundkörper GK an einer der Oberseite 3.1 gegenüberliegenden Unterseite 3.2 vier weitere, in ihrer jeweiligen Längserstreckung lotrecht zu den ersten beiden Gelenkachsen GA1, GA2 stehende Gelenkachsen GA3, GA4, GA5 GA6 aufweisen. Insbesondere liegen dabei die dritte Gelenkachse GA3 und die vierte Gelenkachse GA4 in einer ersten Linie L1, die quer, vorzugsweise lotrecht, zur Längsrichtung der Transportstrecke TS verläuft, während die fünfte Gelenkachse GA5 und die sechste Gelenkachse GA6 in einer zweiten Linie L2 liegen, die parallel zu der ersten Linie L1 liegt. Insbesondere liegen dabei die vierte Gelenkachse GA4 und die fünfte Gelenkachse GA5 auf einer dritten Linie L3, in Längsrichtung der Transportstrecke TS verläuft, während die dritte Gelenkachse GA3 und die sechste Gelenkachse GA6 auf einer vierten Linie L4 liegen, die parallel zu der dritten Linie L3 liegt. In der Unteransicht markieren damit die dritte bis sechste Gelenkachse GA3...GA6 die Eckpunkte eines gedachten Rechtecks, das durch die Verbindungslinien in Form der ersten bis vierten Linie L1,..., L4 komplettierbar ist.

An den jeweiligen freien Enden der dritten bis sechsten Gelenkachse GA3, ... GA6 ist ebenfalls jeweils eine drehbare Laufrolle 50, 51, 52, 53 angeordnet. Die entsprechenden Laufflächen der Laufrollen 50,..., 53 verlaufen dabei senkrecht zu den Laufflächen der Laufrollen 34, ..., 37. Dabei kann die jeweilige Lauffläche sämtlicher Laufrollen 50,...,53 aus einem Kunststoff gebildet sein. Ferner können auch die Laufrollen 50,..., 53 identisch untereinander ausgebildet sein. Insbesondere ist an der dritten Gelenkachse GA3 die Laufrolle 50, an der vierten Gelenkachse GA4 die Laufrolle 51, an der fünften Gelenkachse GA5 die Laufrolle 52 und an der sechsten Gelenkachse GA6 die Laufrolle 53 drehbar um die jeweilige Gelenkachse GA3 bis GA6 aufgenommen.

Ferner vorteilhaft sind dabei sämtliche Laufrollen 50,..., 53 jeweils mittels zwei Rollenlager RL1, RL2 drehbar um die entsprechende Gelenkachse GA3, GA4, GA5 GA6 gelagert. Die jeweiligen Rollenlager RL1, RL2 sind dabei unmittelbar benachbart, vorteilhaft kontaktschlüssig benachbart, an der entsprechenden Gelenkachse GA3, GA4, GA5 GA6 angeordnet.

Ferner sind an der Unterseite 3.2 des Grundkörpers GK des Läufers 3 über ein im Querschnitt im Wesentliches U-förmiges Haltemittel 11 beidseitig sowie seitlich der Spulenelemente 9 die Permanentmagnete 8 derart gehaltert, dass die Permanentmagnete 8 einen geringen Abstand im Bereich von 1mm bis 10mm zu den Spulenelementen 9, also dem Stator 7, aufweisen, um einen Berührungskontakt einerseits zwischen dem Läufer 3 und den Spulenelementen 9 zu vermeiden und andererseits einen Spalt für den magnetischen Fluss zwischen dem permanenten Magnetfeld und dem Wanderfeld gering zu halten.

Zusätzlich an zumindest einem Haltelement 11 unterseitig des entsprechenden Permanentmagneten 8 eine Signalgeber 13 für eine Positionsermittlungseinrichtung des Läufers 3 zur Ermittlung der Position entlang der Transportstrecke TS angeordnet sein.

Dabei weist die Laufschiene 2 zumindest abschnittsweise entlang der Transportstrecke TS eine erste und zweite Führungseinrichtung 30, 31 auf, mittels der der zumindest eine Läufer 3 jeweils beidseitig mit den zwei zueinander beabstandeten und jeweils zwischen der ersten und zweiten Führungseinrichtung 30, 31 verlaufenden Gelenkachsen GA1, GA2 geführt ist.

Vorzugsweise weist die Laufschiene 2 einen als Laufschienengestell ausgebildeten Laufschienenkörper 12 zur Aufnahme bzw. Anordnung des Antriebsmoduls 5 des elektromagnetischen Antriebs 4 sowie der ersten und zweiten Führungseinrichtung 30, 31 auf. Vorzugsweise ist erste und zweite Führungseinrichtung 30, 31 entlang der Transportstrecke TS zumindest entlang der Geradenabschnitte G1, G2, vorteilhaft jedoch zusätzlich auch entlang der beiden Bogenabschnitte B1, B2 auf eines als Bogenabschnitt ausgebildeten Laufschienenmoduls 2.1 vorgesehen.

Die Gelenkachsen GA1, GA2 sind dabei jeweils an einem entsprechenden ersten freien Ende GAS11, GAS21 mit der ersten Führungs- und Lagereinrichtung 32.1, 32.2 in der ersten Führungseinrichtung 30 und an einem jeweiligen zweiten freien Ende GAS21, GAS22 mit der zweiten Führungs- und Lagereinrichtung 33.1, 33.2 in der zweiten Führungseinrichtung 31 geführt.

Wie bereits ausgeführt umfassen die ersten und zweiten Führungs- und Lagereinrichtungen 32.1, 32.2, 33.1, 33.2 jeweils wenigstens eine erste und zweite Laufrolle 34...37, die zwischen einer ersten und zweiten, einander gegenüberliegenden und parallel zu den Gelenkachsen GA1, GA2 verlaufenden Führungsfläche 30.1 und 30.2 bzw. 31.1 und 31.2 der jeweiligen Führungseinrichtung 30, 31 geführt sind.

Mehr im Detail ist die jeweils erste Laufrolle 34, 36 der ersten und zweiten Gelenkachse GA1, GA2 in einem ersten Anlageabschnitt 30.11, 31.11 der ersten Führungsfläche 30.1, 31.1 und die jeweils zweite Laufrolle 35, 37 der ersten und zweiten Gelenkachse GA1, GA2 in einem zweiten Anlageabschnitt 30.21, 31.21 der zweiten Führungsfläche 30.2, 31.2 anliegend und zueinander vorgespannt geführt.

Ferner sind der erste und zweite Anlageabschnitt 30.11 und 30.21 bzw. 31.11 und 31.21 entlang der Gelenkachsen GA1, GA2 zueinander versetzt und einander gegenüberliegend vorgesehen.

Dabei können die jeweilige erste und zweite Gelenkachse GA1, GA2 des entsprechen Läufers 3 als einteilige insbesondere einstückige Gelenkstange ausgebildet sein, die sich zwischen ihrem entsprechenden ersten und zweiten freien Ende GAS11, GAS12, GAS21, GAS22 derart erstreckt, dass der jeweilige Läufer 3 jeweils zwischen der ersten und zweiten Führungseinrichtung 30, 31 verlaufende Gelenkachsen GA1, GA2 aufweist. Die Gelenkachsen GA1, GA2 können dabei als Gelenkbolzen ausgebildet sein.

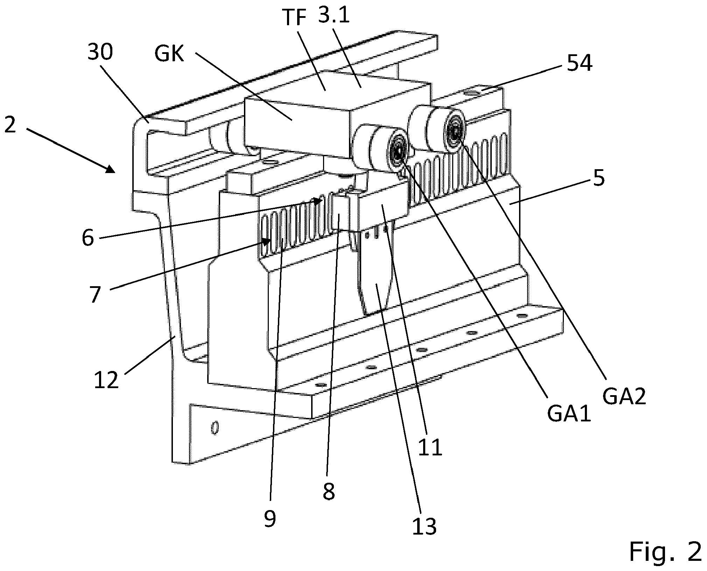

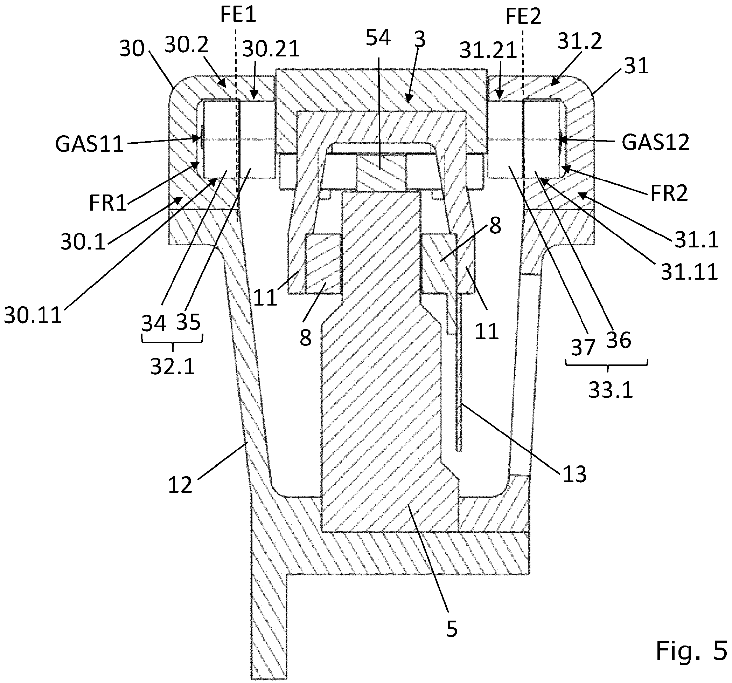

Wie insbesondere in den Figuren 2 und 5 gezeigt, sind die jeweiligen beiden freien Enden GAS11, GAS12, GAS21, GAS22 der beiden Gelenkachsen GA1, GA2 in der ersten und zweiten Führungseinrichtung 30, 31 in zwei gegenüberliegenden und parallel zur Transportrechte TS orientierten Führungsebenen FE1, FE2 geführt. Mithin bildet die erste und zweite Führungseinrichtung 30, 31 in der Ausführungsvarianten der Figuren 2 und 5 damit eine horizontale Führung für die jeweilige Gelenkachsen GA1, GA2 eines entsprechenden Läufers 3 aus.

Somit ist die jeweils erste und zweite Laufrolle 34...37 der jeweiligen ersten und zweiten Führungs- und Lagereinrichtung 32, 33 der beiden Gelenkachsen GA1, GA2 zwischen den jeweiligen Führungsfläche 30.1, 30.2 bzw. 31.1, 31.2 der entsprechenden ersten bzw. zweiten Führungseinrichtung 30, 31 parallel der Transportstrecke TS A geführt und damit insbesondere lotrecht der Führungsebenen FE1 und FE2.

Dabei kann vorgesehen sein, dass bezogen auf die Längserstreckung der jeweiligen Gelenkachse GA1, GA2 die jeweils erste Laufrolle 34 der ersten Führungs- und Lagereinrichtung 32 eine erste, äußere Laufrolle 34 und die jeweils zweite Laufrolle 35 eine zweite innere Laufrolle 35 ausbildet, die entlang der jeweiligen Gelenkachse GA1, GA2 um näherungsweise die Breite der jeweils ersten äußeren Laufrolle 34 in Richtung des jeweils zweiten freien Endes GAS21, GAS22 versetzt an der entsprechenden Gelenkachse GA1, GS2 unmittelbar benachbart der ersten äußeren Laurfolle 34 vorgesehen ist.

Auf Grund des spiegelsymmetrischen Aufbaus des Läufers 3 ist die entsprechende erste Laufrolle 36 der zweiten Führungs- und Lagereinrichtung 33 im Bereich des jeweiligen zweiten freien Endes GAS21, GAS22 um die entsprechende Gelenkachse GA1, GA2 drehbar vorgesehen, während die entsprechende zweite Laufrolle 37 auf der dem entsprechenden ersten freien Ende GAS11, GAS12 zugewandten Seite der entsprechenden ersten Laufrolle 36 ebenfalls um die zugehörige Gelenkachse GA1, GA2 drehbar vorgesehen und zwar der entsprechenden ersten Laufrolle 36 vorzugsweise unmittelbar benachbart anschließend, beispielweise kontaktschlüssig anschließend. In diesem Zusammenhang gilt es anzumerken, dass aufgrund des symmetrischen Aufbaus des Läufers 3 sämtliche im Zusammenhang der ersten Gelenkachse GA1 getroffenen Erläuterungen oder Darstellungen in den Figuren "Mutatis Mutandis" - also analog - auch für die zweite Gelenkachse GA2 zutreffen.

Dies bedeutet insbesondere bezogen auf die Längserstreckung der beiden Gelenkachse GA1, GA2, dass damit die jeweilige erste Laufrolle 36 der zweiten Führungs- und Lagereinrichtung 33 eine erste äußere Laufrolle 36 und die jeweilige zweite Laufrolle 37 eine zweite innere Laufrolle 37 ausbildet, die entlang der entlang der jeweiligen Gelenkachse GA1, GA2 um näherungsweise die Breite der jeweiligen ersten äußeren Laufrolle 36 in Richtung des jeweiligen ersten freien Endes GAS11, GAS21 versetzt an der entsprechenden Gelenkachse GA1, GA2 unmittelbar benachbart der entsprechenden ersten äußeren Laufrolle 36 vorgesehen ist.

Die jeweilige erste Laufrolle 34 der ersten Führungs- und Lagereinrichtung 32 ist an dem ersten Anlageabschnitt 30.11 der ersten Führungsfläche 30.1 anliegend gegen die an dem zweiten Anlageabschnitt 30.21 der zweiten Führungsfläche 30.2 jeweils anliegende zweite Laufrolle 35 in der ersten Führungseinrichtung 30 vorgespannt geführt und die jeweils erste Laufrolle 36 der zweiten Führungs- und Lagereinrichtung 33 ist an dem ersten Anlageabschnitt 31.11 der ersten Führungsfläche 31.1 anliegend gegen die jeweilige an dem zweiten Anlageabschnitt 31.21 der zweiten Führungsfläche 31.2 anliegende zweite Laufrolle 37 in der zweiten Führungseinrichtung 31 vorgespannt geführt.

Ferner vorteilhaft ist die jeweilige erste Laufrolle 34 der jeweiligen ersten Führungs- und Lagereinrichtung 32 an dem ersten Anlageabschnitt 30.11 der ersten Führungsfläche 30.1 anliegend und die an dem zweiten Anlageabschnitt 30.21 der zweiten Führungsfläche 30.2 anliegende jeweilige zweite Laufrolle 35 in der ersten Führungseinrichtung 30 vorgespannt geführt gegenüber den an dem ersten Anlageabschnitt 31.11 der ersten Führungsfläche 31.1 anliegenden jeweiligen ersten Laufrollen 36 der entsprechenden zweiten Führungs- und Lagereinrichtung 33 und den an dem zweiten Anlageabschnitt 31.21 der zweiten Führungsfläche 31.2 anliegend geführten jeweiligen zweiten Laufrollen 37 der entsprechenden zweiten Führungseinrichtung 31.

Durch die vorgespannte Führung der jeweiligen Gelenkachse GA1 und GA2 in der ersten und zweiten Führungseinrichtung 30, 31 wirken im Bereich der entsprechenden ersten Führungs- und Lagereinrichtung 32 jeweils von dem ersten bzw. zweiten Anlageabschnitt 30.11, 30.21 der ersten Führungseinrichtung 30 lotrecht auf die entsprechenden Gelenkachsen GA1 und GA2 gerichtete Vorspannkräfte, die somit entlang der jeweiligen Gelenkachse GA1, GA2 versetzt und gegenüberliegend, also aufeinander zu gerichtet sind und damit ein Verspannen der entsprechend ersten Führungs- und Lagereinrichtung 32 entlang der Längserstreckung der zugehörigen Gelenkachse GA1, GA2 in der entsprechend ersten Führungseinrichtung 30 gegenüber der in der jeweiligen zweiten Führungseinrichtung 31 geführten jeweiligen zweiten Führungs- und Lagereinrichtung 33 sicherstellen, während im Bereich der jeweiligen zweiten Führungs- und Lagereinrichtung 33 jeweils von dem ersten bzw. zweiten Anlageabschnitt 31.11, 31.21 der zweiten Führungseinrichtung 31 lotrecht auf die entsprechende Gelenkachse GA1, GA2 gerichtete Vorspannkräfte, die somit entlang der jeweiligen Gelenkachse GA1, GA2 versetzt und gegenüberliegend, also aufeinander zu gerichtet sind und damit ein Verspannen jeweiligen zweiten Führungs- und Lagereinrichtung 33 entlang der Längserstreckung der zugehörigen Gelenkachse GA1, GA2 in der jeweiligen zweiten Führungseinrichtung 31 gegenüber der in der ersten Führungseinrichtung 30 geführten entsprechenden ersten Führungs- und Lagereinrichtung 32 sicherstellt.

Die erste Führungseinrichtung 30 bildet hierfür zwischen der ersten und zweiten Führungsfläche 30.1, 30.2 einen ersten Führungsraum FR1 aus, der im Bereich der ersten und zweiten Anlagefläche 30.11, 30.21 in den ersten Führungsraum FR1 zurückspringt, also in diesem Bereich gestuft ausgebildet ist, derart, dass die entsprechend erste Laufrolle 34 der jeweils zugehörigen ersten Führungs- und Lagereinrichtung 32 an der ersten Führungsfläche 30.1 im Bereich des in den ersten Führungsraum FR1 zurückspringenden ersten Anlageabschnitt 30.11 anliegt und die entsprechende zweite Laufrolle 35 an der zweiten Führungsfläche 30.2 im Bereich des in den ersten Führungsraum FR1 zurückspringenden zweiten Anlageabschnittes 30.21 anliegt, während die jeweilige zweite Laufrolle 35 der jeweils zugehörigen ersten Führungs- und Lagereinrichtung 32 an dem nicht in ersten den Führungsraum FR1 zurückspringenden Teilabschnitt von der ersten Führungsfläche 30.1 frei kommt, also insbesondere nicht anliegt und die jeweilige erste Laufrolle 34 von dem nicht in den ersten Führungsraum FR1 zurückspringenden Teilabschnitt der zweiten Führungsfläche 30.2 freikommt.

Zudem bildet auch die zweite Führungseinrichtung 31 zwischen der ersten und zweiten Führungsfläche 31.1, 31.2 einen zweiten Führungsraum FR2 aus, der im Bereich der ersten und zweiten Anlagefläche 31.11, 31.21 in den zweiten Führungsraum FR2 zurückspringt, also in diesem Bereich gestuft ausgebildet ist, derart, dass die entsprechend erste Laufrolle 36 der jeweils zugehörigen zweiten Führungs- und Lagereinrichtung 33 an der ersten Führungsfläche 31.1 im Bereich des in den zweiten Führungsraum FR2 zurückspringenden ersten Anlageabschnitt 31.11 anliegt und die entsprechend zweite Laufrolle 37 an der zweiten Führungsfläche 31.2 im Bereich des in den zweiten Führungsraum FR2 zurückspringenden zweiten Anlageabschnittes 31.21 anliegt, während die jeweilige zweite Laufrolle 37 der jeweils zugehörigen zweiten Führungs- und Lagereinrichtung 33 an dem nicht in zweiten den Führungsraum FR2 zurückspringenden Teilabschnitt von der ersten Führungsfläche 31.1 frei kommt, also insbesondere nicht anliegt und die jeweilige erste Laufrolle 36 von dem nicht in den zweiten Führungsraum FR2 zurückspringenden Teilabschnitt der zweiten Führungsfläche 31.2 freikommt.

Wird ein entsprechender Läufer 3 entlang der Transportstrecke TS bewegt, so drehen sich die jeweiligen ersten und zweiten Laufrollen 34...37 hierdurch jeweils gegensinnig zueinander um die durch die Gelenkachsen GA1, GA2 gebildeten Drehachsen. Die gegensinnige Drehung der jeweiligen ersten Laufrollen 34, 36 der ersten und zweiten Gelenkachse GA1, GA2 zu den jeweiligen zweiten Laufrolle 35, 37 entsteht durch die jeweils gestufte Ausbildung der entsprechenden ersten und zweiten Führungsräume FR1, FR2, so dass sich die ersten Laufrollen 34, 36 nur an dem ersten Anlageabschnitt, 30.11, 31.11 der jeweiligen ersten Führungsfläche 30.1, 31.1 und die zweiten Laufrollen 35, 37 nur an dem zweiten Anlagenabschnitt 30.21, 31.21 der jeweiligen zweiten Führungsfläche 30.2, 31.2 anliegend abrollen bzw. abwälzen.

Ferner ist an der Oberseite des Antriebsmoduls 5 entlang dessen Längserstreckung eine Führungsschiene 54 vorgesehen, die mit den der Unterseite 3.2 des Läufers 3 angeordneten Laufrollen 50,..., 53 in Wirkeingriff steht. Die Führungsschiene 54 kann dabei im Wesentlichen rechteckig ausgebildet sein und eine Länge in Längserstreckung aufweisen, die im Wesentlichen der Länge eines Antriebsmoduls 5 entspricht. Insbesondere kann die Führungsschiene 54 fest, jedoch lösbar, mit der Oberseite bzw. an der Oberseite des Antriebsmoduls 5 verschraubt sein, das seinerseits wiederum mit seiner Unterseite mit dem Laufschienenkörper 12 fest, jedoch lösbar, verbunden, insbesondere verschraubt sein kann. Dabei bildet die Führungsschiene 54 insbesondere eine seitliche Führung für den Läufer 3 aus, der sich während seiner Bewegung beidseitig sowie kontaktschlüssig entlang der Transportstrecke TS mit seinen Laufrollen 50...53 an der Führungsschiene 54 entlang rollt bzw. an dieser abwälzt.

In anderen Worten ist also zur vertikalen Führung der des Läufers 3 zwischen der ersten und zweiten Führungseinrichtung 30, 31 sowie zwischen den Laufrollen 50, ... 53 die Führungsschiene 54 vorgesehen, die an der Oberseite des Antriebsmoduls 5 angeordnet ist.

### Bezugszeichenliste

- 1: Transportsystem
- 2: Laufschiene
- 2.1: Laufschienenmodul
- 3: Läufer
- 3.1: Oberseite
- 3.2: Unterseite
- 4: elektromagnetischer Antrieb
- 5: Antriebsmodul
- 6: Linearmotor
- 7: Stator
- 8: Permanentmagnet
- 9: Spulenelement
- 11: Haltemittel
- 12: Laufschienenkörper
- 13: Signalgeber

- 30: erste Führungseinrichtung
- 30.1: erste Führungsfläche
- 30.11: erster Anlageabschnitt
- 30.2: zweite Führungsfläche
- 30.21: zweiter Anlageabschnitt
- 31: zweite Führungseinrichtung
- 31.1: erste Führungsfläche
- 31.11: erster Anlageabschnitt
- 31.2: zweite Führungsfläche
- 31.21: zweiter Anlageabschnitt
- 32.1, 32.2: erste Führungs- und Lagereinrichtung
- 33.1, 33.2: zweite Führungs- und Lagereinrichtung
- 34...37: Laufrolle

- 50...53: Laufrolle
- 54: Führungsschiene

- G1, G2: Geradenabschnitt
- B1, B2: Bogenabschnitt
- GK: Grundkörper
- GA1, GA2: Gelenkachse
- GA3...GA6: Gelenkachse
- GAA1, GAA2: erster und zweiter Gelenkachsenabschnitt
- GAS11, GAS21: erstes freies Ende
- GAS12, GAS22: zweites freies Ende
- FE1: erste Führungsebene
- FE2: zweite Führungsebene
- FR1: erster Führungsraum
- FR2: zweiter Führungsraum
- TS: Transportstrecke
- TF: Transportfläche
- RL1, RL2: Rollenlager
- L1...L4: Linie
- RA1, RA2: erste und zweite Rotationsachse

## Patentansprüche

1. Transportsystem (1) zur Beförderung von Gegenständen entlang einer Transportstrecke (TS),
wenigstens umfassend eine ortsfeste Laufschiene (2) und zumindest einen entlang der Laufschiene (2) bewegbaren Läufer (3) zum Befördern der Gegenstände entlang der Transportstrecke (TS),
ferner umfassend einen elektromagnetischen Antrieb (4) zum Antreiben des zumindest einen Läufers (3) mittels elektromagnetischer Kräfte, wobei der elektromagnetische Antrieb (4) eine Vielzahl von ortsfesten Spulenelementen (9) und zumindest einen Permanentmagneten (8) aufweist,
wobei die ortsfesten Spulenelemente (9) an der ortsfesten Laufschiene (2) und der zumindest eine Permanentmagnet (8) an dem zumindest einem Läufer (3) vorgesehen sind, wobei die Laufschiene (2) zumindest abschnittsweise entlang der Transportstrecke (TS) eine erste und zweite Führungseinrichtung (30, 31) aufweist, mittels der der zumindest eine Läufer (3) jeweils beidseitig mit zwei zueinander beabstandeten und jeweils zwischen der ersten und zweiten Führungseinrichtung (30, 31) verlaufenden Gelenkachsen (GA1, GA2) geführt ist,
die jeweils an einem ersten freien Ende (GAS11, GAS21) mit einer ersten Führungs- und Lagereinrichtung (32.1, 32.2) in der ersten Führungseinrichtung (30) und an einem jeweiligen zweiten freien Ende (GAS12, GAS22) mit einer zweiten Führungs- und Lagereinrichtung (33.1, 33.2) in der zweiten Führungseinrichtung (31) geführt sind,
wobei die ersten und zweiten Führungs- und Lagereinrichtungen (32.1, 32.2, 33.1, 33.2) jeweils wenigstens eine erste und zweite Laufrolle (34...37) umfassen, die zwischen einer ersten und zweiten, einander gegenüberliegenden und parallel zu den Gelenkachsen (GA1, GA2) verlaufenden Führungsfläche (30.1 und 30.2 bzw. 31.1 und 31.2) der jeweiligen Führungseinrichtung (30, 31) geführt sind,
wobei die jeweils erste Laufrolle (34, 36) in einem ersten Anlageabschnitt (30.11, 31.11) der ersten Führungsfläche (30.1, 31.1) und die jeweils zweite Laufrolle (35, 37) in einem zweiten Anlageabschnitt (30.21, 31.21) der zweiten Führungsfläche (30.2, 31.2) anliegen und zueinander vorgespannt geführt sind,
wobei der erste und zweite Anlageabschnitt (30.11 und 30.21 bzw. 31.11 und 31.21) entlang der Gelenkachsen (GA1, GA2) zueinander versetzt und einander gegenüberliegend sind und wobei die jeweilige erste und zweite Laufrolle (34, 35) der ersten Führungs- und Lagereinrichtung (32.1, 32.2) der entsprechenden Gelenkachse (GA1, GA2) vorgespannt gegenüber der jeweiligen ersten und zweiten Laufrolle (36, 37) der zweiten Führungs- und Lagereinrichtung (33) der entsprechenden Gelenkachse (GA1, GA2) geführt sind.

2. Transportsystem (1) nach Anspruch 1, **dadurch gekennzeichnet, dass** die jeweiligen beiden freien Enden (GAS11, GAS12; GAS21, GAS22) der beiden Gelenkachsen (GA1 und GA2) in der ersten und zweiten Führungseinrichtung (30, 31) in zwei gegenüberliegend und parallel zur Transportstrecke (TS) orientierten Führungsebenen (FE1, FE2) geführt sind.

3. Transportsystem (1) nach Anspruch 1 oder 2, **dadurch gekennzeichnet, dass** die jeweilige erste und zweite Laufrolle (34, 35) der entsprechend ersten Führungs- und Lagereinrichtung (32.1, 32.2) um die jeweilige Gelenkachse (GA1, GA2) drehbar und unmittelbar benachbart an dieser im Bereich des jeweiligen ersten freien Endes (GAS11, GAS21) vorgesehen sind und/oder dass die jeweilige erste und zweite Laufrolle (36, 37) der entsprechenden zweiten Führungs- und Lagereinrichtung (33.1, 33.2) um die jeweilige Gelenkachse (GA1, GA2) drehbar und unmittelbar benachbart an dieser im Bereich des jeweiligen zweiten freien Endes (GAS12; GAS22) vorgesehen sind.

4. Transportsystem (1) nach einem der vorangehenden Ansprüche 1 bis 3, **dadurch gekennzeichnet, dass** die jeweilige erste Laufrolle (34) der ersten Führungs- und Lagereinrichtung (32.1, 32.2) an dem ersten Anlageabschnitt (30.11) der ersten Führungsfläche (30.1) anliegend gegen die an dem zweiten Anlageabschnitt (30.21) der zweiten Führungsfläche (30.2) jeweils anliegende zweite Laufrolle (35) in der ersten Führungseinrichtung (30) vorgespannt geführt ist und die jeweils erste Laufrolle (36) der zweiten Führungs- und Lagereinrichtung (33.1, 33.2) an dem ersten Anlageabschnitt (31.11) der ersten Führungsfläche (31.1) anliegend gegen die jeweilige an dem zweiten Anlageabschnitt (31.21) der zweiten Führungsfläche (31.2) anliegende zweite Laufrolle (37) in der zweiten Führungseinrichtung (31) vorgespannt geführt ist.

5. Transportsystem (1) nach einem der vorangehenden Ansprüche 1 bis 4, **dadurch gekennzeichnet, dass** die erste Führungseinrichtung (30) zwischen der ersten und zweiten Führungsfläche (30.1, 30.2) einen ersten Führungsraum (FR1) aufweist, der im Bereich der ersten und zweiten Anlagefläche (30.11, 30.21) in den ersten Führungsraum (FR1) zurückspringt, indem der erste Führungsraum (FR1) in diesem Bereich gestuft ausgebildet ist und/oder dass die zweite Führungseinrichtung (31) zwischen der ersten und zweiten Führungsfläche (31.1, 31.2) einen zweiten Führungsraum (FR2) aufweist, der im Bereich der ersten und zweiten Anlagefläche (31.11, 31.21) in den zweiten Führungsraum FR2 zurückspringt, indem der zweite Führungsraum (FR2) in diesem Bereich gestuft ausgebildet ist.

6. Transportsystem (1) nach einem der vorangehenden Ansprüche, **dadurch gekennzeichnet, dass** die Laufrollen (34...37) identisch zueinander ausgebildete Außendurchmesser aufweisen.

7. Transportsystem (1) nach einem der vorangehenden Ansprüche, **dadurch gekennzeichnet, dass** sämtliche Laufrollen (34...37) jeweils mittels zwei Rollenlager (RL1, RL2) drehbar um die entsprechende Gelenkachse (GA1, GA2) gelagert sind.

8. Transportsystem (1) nach einem der vorangehenden Ansprüche, **gekennzeichnet durch** mehrere unabhängig und autonom zueinander entlang der Transportstrecke (TS) bewegbare Läufer (3), wobei der elektromagnetische Antrieb (4) als Linearantrieb, vorzugsweise als Langstator-Linearantrieb ausgebildet ist.

9. Transportsystem (1) nach einem der vorangehenden Ansprüche, **dadurch gekennzeichnet, dass** der Läufer (3) an einer der Oberseite (3.1) gegenüberliegenden Unterseite (3.2) zumindest vier weitere, in ihrer jeweiligen Längserstreckung lotrecht zu den ersten beiden Gelenkachsen (GA1, GA2) stehende Gelenkachsen (GA3, GA4, GA5 GA6) aufweist, die sich paarweise entlang einer Führungsschiene (54) gegenüberliegen und/oder dass den jeweiligen freien Enden der Gelenkachsen (GA3, GA4, GA5, GA6) jeweils eine drehbare Laufrolle (50, 51, 52, 53) angeordnet ist.

10. Transportsystem (1) nach Anspruch 9, **dadurch gekennzeichnet, dass** die drehbaren Laufrollen (50, 51, 52, 53) identisch untereinander, sowie vorzugsweise identisch zu den ersten und zweiten Laufrollen (34...37) ausgebildet sind.

11. Transportsystem (1) nach einem der vorangehenden Ansprüche 9 oder 10, **dadurch gekennzeichnet, dass** sämtliche drehbaren Laufrollen (50, 51, 52, 53) jeweils mittels zwei Rollenlager (RL1, RL2) drehbar um die entsprechenden lotrechten Gelenkachsen (GA3, GA4, GA5 GA6) gelagert sind.

12. Transportsystem (1) nach einem der vorangehenden Ansprüche 9 bis 11, **dadurch gekennzeichnet, dass** die Führungsschiene (54) an der Oberseite eines Antriebsmoduls (5) der Laufschiene (2) entlang dessen Längserstreckung vorgesehen ist und die mit den an der Unterseite (3.2) des Läufers (3) angeordneten Laufrollen (50, 51, 52, 53) in Wirkeingriff steht und/oder dass die Führungsschiene (54) eine seitliche Führung für den Läufer (3) ausbildet, der sich während seiner Bewegung beidseitig sowie kontaktschlüssig entlang der Transportstrecke (TS) mit seinen Laufrollen (50, 51, 52, 53) an der Führungsschiene (54) entlang rollt bzw. an dieser abwälzt.

13. Transportsystem (1) nach einem der vorangehenden Ansprüche, **dadurch gekennzeichnet, dass** die erste und/oder zweite Gelenkachse (GA1, GA2) des Läufers (3) an dem ersten und zweiten freien Ende (GAS11, GAS12, GAS21, GAS22) jeweils einen ersten und zweiten Gelenkachsenabschnitt (GAA1, GAA2) aufweist, wobei der erste Gelenkachsenabschnitt (GAA1) eine erste Rotationsache (RA1) für die jeweils erste Laufrolle (34 und 36) und der jeweils zweite Gelenkachsenabschnitt (GAA2) eine zweite Rotationsachse (RA2) für die jeweils zweite Laufrolle (35 und 37) ausbildet, und wobei die jeweils erste Rotationsachse (RA1) versetzt, insbesondere parallel versetzt, zu der jeweils zweiten Rotationsachse (RA2) verläuft.

14. Transportsystem (1) nach Anspruch 13, **dadurch gekennzeichnet, dass** die erste und/oder die zweite Gelenkachse (GA1, GA2) im Bereich der jeweiligen Gelenkachsenabschnitte (GAA1, GAA2) als Exzenterachse ausgebildet ist.

## Claims

1. A transport system (1) for conveying objects along a transport path (TS),
at least comprising a stationary running rail (2) and at least one runner (3) movable along the running rail (2) for conveying the objects along the transport path (TS),
further comprising an electromagnetic drive (4) for driving the at least one runner (3) by means of electromagnetic forces, wherein the electromagnetic drive (4) comprises a plurality of stationary coil elements (9) and at least one permanent magnet (8),
wherein the stationary coil elements (9) are provided on the stationary running rail (2) and the at least one permanent magnet (8) is provided on the at least one runner (3),
wherein the running rail (2), at least in sections along the transport path (TS), comprises a first and a second guide device (30, 31) by means of which the at least one runner (3) is guided in each case on both sides by means of two articulated axles (GA1, GA2) which are spaced apart from one another and run in each case between the first and second guide devices (30, 31),
which are each guided at a first free end (GAS11, GAS21) with a first guide and bearing device (32.1, 32.2) in the first guide device (30) and at a respective second free end (GAS12, GAS22) with a second guide and bearing device (33.1, 33.2) in the second guide device (31),
wherein the first and second guide and bearing devices (32.1, 32.2, 33.1, 33.2) each comprise at least one first and second roller (34...37) which are guided between a first and second guide surface (30.1 and 30.2 and 31.1 and 31.2, respectively) of the respective guide device (30, 31), which guide surfaces are opposite to one another and run parallel to the articulated axles (GA1, GA2),
wherein the respective first roller (34, 36) rests against a first contact section (30.11, 31.11) of the first guide surface (30.1, 31.1) and the respective second roller (35, 37) rests against a second contact section (30.21, 31.21) of the second guide surface (30.2, 31.2) and are guided such that they are biased towards one another,
wherein the first and second contact sections (30.11 and 30.21 and 31.11 and 31.21, respectively) are offset to one another other along the articulated axles (GA1, GA2) and are located opposite one another, and wherein the respective first and second rollers (34, 35) of the first guide and bearing device (32.1, 32.2) of the corresponding articulated axle (GA1, GA2) are guided such that they are biased with respect to the respective first and second rollers (36, 37) of the second guide and bearing means (33) of the corresponding articulated axle (GA1, GA2).

2. Transport system (1) according to claim 1, **characterized in that** the respective two free ends (GAS11, GAS12; GAS21, GAS22) of the two articulated axles (GA1 and GA2) are guided in the first and second guide devices (30, 31) in two guide planes (FE1, FE2) oriented opposite and parallel to the transport path (TS).

3. Transport system (1) according to claim 1 or 2, **characterized in that** the respective first and second rollers (34, 35) of the corresponding first guide and bearing device (32.1, 32. 2) are provided to be rotatable about the respective articulated axle (GA1, GA2) and directly adjacent thereto in the region of the respective first free end (GAS11, GAS21), and/or **in that** the respective first and second rollers (36, 37) of the corresponding second guide and bearing device (33.1, 33.2) are provided to be rotatable about the respective articulated axle (GA1, GA2) and directly adjacent thereto in the region of the respective second free end (GAS12; GAS22).

4. Transport system (1) according to any one of the preceding claims 1 to 3, **characterized in that** the respective first roller (34) of the first guide and bearing device (32.1, 32.2) is guided in the first guide device (30) such that it rests against the first contact section (30.11) of the first guide surface (30.1) and is biased towards the respective second roller (35) that rests against the second contact section (30.21) of the second guide surface (30.2), and the respective first roller (36) of the second guide and bearing device (33.1, 33.2) is guided in the second guide device (31) such that it rests against the first contact section (31.11) of the first guide surface (31.1) and is biased towards the respective second roller (37) that rests against the second contact section (31.21) of the second guide surface (31.2).

5. Transport system (1) according to any one of the preceding claims 1 to 4, **characterized in that** between the first and second guide surfaces (30.1, 30.2), the first guide device (30) comprises a first guide space (FR1) which, in the region of the first and second contact surfaces (30.11, 30.21) is recessed into the first guide space (FR1) **in that** the first guide space (FR1) is designed to be stepped in this region, and/or **in that** between the first and second guide surfaces (31.1, 31.2), the second guide device (31) has a second guide space (FR2) which, in the region of the first and second contact surfaces (31.11, 31.21), is recessed into the second guide space (FR2) **in that** the second guide space (FR2) is designed to be stepped in this region.

6. Transport system (1) according to any one of the preceding claims, **characterized in that** the rollers (34...37) have outer diameters that are designed to be identical to one another.

7. Transport system (1) according to any one of the preceding claims, **characterized in that** all rollers (34...37) are mounted in each case by means of two roller bearings (RL1, RL2) to be rotatable about the corresponding articulated axle (GA1, GA2).

8. Transport system (1) according to any one of the preceding claims, **characterized by** a plurality of runners (3) movable independently and autonomously with respect to one another along the transport path (TS), wherein the electromagnetic drive (4) is designed as a linear drive, preferably as a long-stator linear drive.

9. Transport system (1) according to any one of the preceding claims, **characterized in that** on a bottom side (3.2) opposite the top side (3.1), the runner (3) comprises at least four further articulated axles (GA3, GA4, GA5, GA6), the respective longitudinal extent of which is perpendicular to the first two articulated axles (GA1, GA2) and which are opposite one another in pairs along a guide rail (54) and/or **in that** in each case one rotatable roller (50, 51, 52, 53) is arranged at the respective free ends of the articulated axles (GA3, GA4, GA5, GA6).

10. Transport system (1) according to claim 9, **characterized in that** the rotatable rollers (50, 51, 52, 53) are designed to be identical to each other and preferably identical to the first and second rollers (34...37).

11. Transport system (1) according to any one of the preceding claims 9 or 10, **characterized in that** all rotatable rollers (50, 51, 52, 53) are mounted in each case by means of two roller bearings (RL1, RL2) to be rotatable about the corresponding perpendicular articulated axles (GA3, GA4, GA5 GA6).

12. Transport system (1) according to any one of the preceding claims 9 to 11, **characterized in that** the guide rail (54) is provided on the top side of a drive module (5) of the running rail (2) along the longitudinal extent thereof and is in operative engagement with the rollers (50, 51, 52, 53) arranged on the bottom side (3.2) of the runner (3) and/or **in that** the guide rail (54) forms a lateral guide for the runner (3) which, during its movement, rolls with its rollers (50, 51, 52, 53) along or on the guide rail (54) on both sides and in contact along the transport path (TS).

13. Transport system (1) according to any one of the preceding claims, **characterized in that** the first and/or second articulated axle (GA1, GA2) of the runner (3) comprises a first and second articulated axle section (GAA1, GAA2) at the first and second free ends (GAS11, GAS12, GAS21, GAS22), respectively, wherein the first articulated axle section (GAA1) forms a first axis of rotation (RA1) for the respective first roller (34 and 36) and the respective second articulated axle section (GAA2) forms a second axis of rotation (RA2) for the respective second roller (35 and 37), and wherein the respective first axis of rotation (RA1) extends offset, in particular offset parallel, to the respective second axis of rotation (RA2).

14. Transport system (1) according to claim 13, **characterized in that** the first and/or the second articulated axle (GA1, GA2) is designed as an eccentric axle in the region of the respective articulated axle sections (GAA1, GAA2).

## Revendications

1. Système de transport (1) pour transporter des objets le long d'une section de transport (TS),
comprenant au moins un rail de roulement (2) fixe et au moins un patin mobile (3) pouvant se déplacer le long du rail de roulement (2) pour le transport des objets le long de la section de transport (TS),
comprenant en plus un système d'entraînement électromagnétique (4) pour entraîner l'au moins un patin mobile (3) au moyen de forces électromagnétiques, sachant que le système d'entraînement électromagnétique (4) comporte une pluralité d'éléments de bobine (9) fixes et au moins un aimant permanent (8),
sachant que les éléments de bobine (9) fixes sont prévus sur le rail de roulement fixe (2) et l'au moins un aimant permanent (8) est prévu sur l'au moins un patin mobile (3),
sachant que le rail de roulement (2) comporte au moins par endroits le long de la section de transport (TS) un premier et un deuxième système de guidage (30, 31) au moyen desquels l'au moins un patin mobile (3) est guidé respectivement des deux côtés avec deux axes d'articulation (GA1, GA2) passant à distance l'un de l'autre et respectivement entre le premier et le deuxième système de guidage (30, 31),
qui sont guidés respectivement sur une première extrémité libre (GAS11, GAS21) avec un premier système de guidage et de positionnement (32.1, 32.2) dans le premier système de guidage (30) et sur une deuxième extrémité libre (GAS12, GAS22) respective avec un deuxième système de guidage et de positionnement (33.1, 33.2) dans le deuxième système de guidage (31),
sachant que les premier et deuxième systèmes de guidage et de positionnement (32.1, 32.2, 33.1, 33.2) comprennent respectivement au moins un premier et un deuxième galet de roulement (34...37), qui sont guidés entre une première et une deuxième surface de guidage (30.1 et 30.2 ou 31.1 et 31.2) du système de guidage respectif (30, 31), opposées l'une à l'autre et passant parallèlement aux axes d'articulation (GA1, GA2), passant
sachant que respectivement le premier galet de roulement (34, 36) vient s'appliquer dans une première section d'appui (30.11, 31.11) de la première surface de guidage (30.1, 31.1) et respectivement le deuxième galet de roulement (35, 37) vient s'appliquer dans une deuxième section d'appui (30.21,31.21) de la deuxième surface de guidage (30.2,31.2) et sont guidés de façon précontrainte l'un par rapport à l'autre,
sachant que la première et la deuxième section d'appui (30.11 et 30.21 ou 31.11 et 31.21) sont décalées l'une par rapport à l'autre le long des axes d'articulation (GA1, GA2) et sont opposées l'une par rapport à l'autre et sachant que le premier et le deuxième galet de roulement (34, 35) respectif du premier système de guidage et de positionnement (32.1, 32.2) de l'axe d'articulation correspondant (GA1, GA2) sont guidés de façon précontrainte par rapport au premier et deuxième galet de roulement (36, 37) respectif du deuxième système de guidage et de positionnement (33) de l'axe d'articulation correspondant (GA1, GA2).

2. Système de transport (1) selon la revendication 1, **caractérisé en ce que** les deux extrémités libres respectives (GAS11, GAS12, GAS21, GAS22) des deux axes d'articulation (GA1 et GA2) dans le premier et le deuxième système de guidage (30, 31) sont guidés dans deux plans de guidage (FE1, FE2) opposés et orientés parallèlement à la section de transport (TS).

3. Système de transport (1) selon la revendication 1 ou 2, **caractérisé en ce que** le premier et le deuxième galet de roulement (34, 35) respectif du premier système de guidage et de positionnement (32.1, 32.2) correspondant sont prévus pouvant tourner autour de l'axe d'articulation (GA1, GA2) respectif et directement voisins sur celui-ci dans la zone de la première extrémité libre respective (GAS11, GAS21) et/ou **en ce que** le premier et le deuxième galet de roulement (36, 37) respectif du deuxième système de guidage et de positionnement (33.1, 33.2) correspondant sont prévus pouvant tourner autour de l'axe d'articulation (GA1, GA2) respectif et directement voisins sur celui-ci dans la zone de la deuxième extrémité libre respective (GAS12, GAS22).

4. Système de transport (1) selon l'une quelconque des revendications précédentes 1 à 3, **caractérisé en ce que** le premier galet de roulement (34) respectif du premier système de guidage et de positionnement (32.1, 32.2), s'appliquant sur la première section d'appui (30.11) de la première surface de guidage (30.1), est guidé dans le premier système de guidage (30) de façon précontrainte contre le deuxième galet de roulement (35) s'appliquant respectivement à la deuxième section d'appui (30.21) de la deuxième surface de guidage (30.2) et respectivement le premier galet de roulement (36) du deuxième système de guidage et de positionnement (33.1, 33.2), s'appliquant sur la première section d'appui (31.11) de la première surface de guidage (31.1), est guidé dans le deuxième système de guidage (31) de façon précontrainte contre le deuxième galet de roulement (37) respectif, s'appliquant à la deuxième section d'appui (31.21) de la deuxième surface de guidage (31.2).

5. Système de transport (1) selon l'une quelconque des revendications précédentes 1 à 4, **caractérisé en ce que** le premier système de guidage (30) comporte un premier espace de guidage (FR1) entre la première et la deuxième surface de guidage (30.1, 30.2), qui rebondit dans la zone de la première et de la deuxième surface d'appui (30.11, 30.21) dans le premier espace de guidage (FR1), le premier espace de guidage (FR1) étant constitué étagé dans cette zone et/ou **en ce que** le deuxième système de guidage (31) comporte un deuxième espace de guidage (FR2) entre la première et la deuxième surface de guidage (31.1, 31.2), qui rebondit dans la zone de la première et deuxième surface d'appui (31.11, 31.21) dans le deuxième espace de guidage (FR2), le deuxième espace de guidage (FR2) étant constitué étagé dans cette zone.

6. Système de transport (1) selon l'une quelconque des revendications précédentes **caractérisé en ce que** les galets de roulement (34...37) comportent des diamètres extérieurs constitués de façon identique les uns par rapport aux autres.

7. Système de transport (1) selon l'une quelconque des revendications précédentes, **caractérisé en ce que** tous les galets de roulement (34...37) sont logés respectivement au moyen de deux roulements à rouleaux (RL1, RL2) pouvant tourner autour de l'axe d'articulation correspondant (GA1, GA2).

8. Système de transport (1) selon l'une quelconque des revendications précédentes, **caractérisé par** plusieurs patins mobiles (3) pouvant se déplacer indépendamment et de façon autonome les uns par rapport aux autres le long de la section de transport (TS), sachant que le système d'entraînement électromagnétique (4) est constitué sous la forme d'un entraînement linéaire, de préférence sous la forme d'un entraînement linéaire à stator longitudinal.

9. Système de transport (1) selon l'une quelconque des revendications précédentes, **caractérisé en ce que** le patin mobile (3) comporte sur une face inférieure (3.2) opposée à la face supérieure (3.1) au moins quatre autres axes d'articulation (GA3, GA4, GA5, GA6) se tenant dans leur extension longitudinale respective perpendiculairement aux deux premiers axes d'articulation (GA1, GA2), qui s'opposent par paire le long d'un rail de guidage (54) et/ou **en ce qu'**un galet de roulement rotatif (50, 51, 52, 53) est disposé respectivement aux extrémités libres respectives des axes d'articulation (GA3, GA4, GA5, GA6).

10. Système de transport (1) selon la revendication 9, **caractérisé en ce que** les galets de roulement rotatifs (50, 51, 52, 53) sont constitués de façon identique entre eux, ainsi de préférence qu'identiques par rapport aux premiers et deuxièmes galets de roulement (34....37).

11. Système de transport (1) selon l'une quelconque des revendications précédentes 9 ou 10, **caractérisé en ce que** tous les galets de roulement rotatifs (50, 51, 52, 53) sont logés respectivement au moyen de deux roulements à rouleaux (RL1, RL2) pouvant tourner autour des axes d'articulation (GA3, GA4, GA5, GA6) perpendiculaires correspondants.

12. Système de transport (1) selon l'une quelconque des revendications précédentes 9 à 11, **caractérisé en ce que** le rail de guidage (54) est prévu sur la face supérieure d'un module d'entraînement (5) du rail de roulement (2) le long de l'extension longitudinale de celui-ci et qui est en prise fonctionnelle avec les galets de roulement (50, 51, 52, 53) disposés sur la face inférieure (3.2) du patin mobile (3) et/ou **en ce que** le rail de guidage (54) constitue un guidage latéral pour le patin mobile (3), qui roule pendant son déplacement des deux côtés ainsi que par conformité de contact le long de la section de transport (TS) avec ses galets de roulement (50, 51, 52, 53) le long du rail de guidage (54) ou reroule sur celui-ci.

13. Système de transport (1) selon l'une quelconque des revendications précédentes, **caractérisé en ce que** le premier et/ou le deuxième axe d'articulation (GA1, GA2) du patin mobile (3) comporte sur la première et la deuxième extrémité libre (GAS11, GAS12, GAS21, GAS22) respectivement une première et une deuxième section d'axe d'articulation (GAA1, GAA2), sachant que la première section d'axe d'articulation (GAA1) constitue un premier axe d'de rotation (RA1) pour respectivement le premier galet de roulement (34 et 36) et respectivement la deuxième section d'axe d'articulation (GAA2) constitue un deuxième axe de rotation (RA2) pour respectivement le deuxième galet de roulement (35 et 37) et sachant que respectivement le premier axe de rotation (RA1) passe décalé, en particulier parallèlement décalé, par rapport respectivement au deuxième axe de rotation (RA2).

14. Système de transport (1) selon la revendication 13, **caractérisé en ce que** le premier et/ou le deuxième axe d'articulation (GA1, GA2) est constitué sous la forme d'un axe excentrique dans la zone des sections d'axe d'articulation (GAA1, GAA2) respectives.
